# EUROPEAN PATENT SPECIFICATION

(11) **EP 1 605 661 B1**
(45) Date of publication and mention of the grant of the patent: **30.08.2006**
(21) Application number: 04291418.4
(22) Date of filing: 07.06.2004
(51) Int. Cl.: H04L 29/06

(54) **Method and device for preventing attacks on a call server**
Verfahren und Vorrichtung zur Verhinderung von Angriffen auf einen Call-Server
Procédé et appareil de prévention d'attaques contre un serveur d'appel

(43) Date of publication of application: 14.12.2005
(73) Proprietor: ALCATEL, 75008 Paris (FR)
(72) Inventor: Oberle, Karsten, 68199 Mannheim (DE); Tomsu, Marco, 71254 Ditzingen (DE); Domschitz, Peter, 70191 Stuttgart (DE); Otterbach, Jürgen, 70499 Stuttgart (DE)
(74) Representative: Rausch, Gabriele

(56) References cited:
- DE-A- 10 152 010
- US-A1- 2003 145 225
- REYNOLDS B.; GHOSAL D.: "Secure IP Telephony using Multi-layered Protection" PROCEEDINGS OF THE 10TH ANNUAL NETWORK AND DISTRIBUTED SYSTEM SECURITY SYMPOSIUM, SAN DIEGO, CA, USA, 6-7 FEBRUARY 2003, [Online] 2003, XP002303699 INTERNET SOCIETY, RESTON, VA, USA ISBN: 1-891562-16-9 Retrieved from the Internet: URL:http://www.isoc.org/isoc/conferences/n dss/03/proceedings/papers/3.pdf> [retrieved on 2004-11-01]

## Description

The present invention refers to a method for preventing attacks on a network server. The server is connected to a network. Data is transmitted between the network server and the network across means for restricting access to the network server. The network server comprises an attack-detection-device for detecting and identifying attacks from the network on the network server.

Furthermore, the invention refers to an attack-prevention-device for preventing attacks on a network server connected to a network via means for restricting access to the network server from the network. The attack-prevention-device is adapted to control the access restricting means.

The method and the attack-prevention-device, for example, can be used for preventing attacks on a call server within a call-based-services-environment. In that case, the network server would be a so-called call server. The call-based-services-environment can also be referred to as session-based-services-environment. Examples for call-based-services are Voice-over-Internet-Protocol (VoIP)-services or multi-media-services. Call-based or session-based means that data transmission across the network is initiated by a call.

A call server is adapted to control the set-up, maintenance and tear-down of a data-transmission-connection (i.e. communication link or media-path) to be established between at least one first user agent and at least one second user agent across the network. Signaling messages are used for controlling the communication link. Of course, the network-environments within which the present invention is realized can comprise more than one network server, all connected to the network. A call server comprises means for establishing calls through the network. The user agents can be IP-telephones or any kind of computers equipped with appropriate audio/ visual and networking hardware, and appropriate signaling software. The access restricting means usually are referred to as a firewall. Firewalls can be individually controlled in order to let certain messages pass through from the network to the call server and to filter, block and/ or throttle other messages.

Protocols used to signal Voice-over-IP (VoIP) connections are, for example, the Session Initiation Protocol (SIP), H.323.

It is known from the state of the art to install a device with static packet filtering rules and bandwidth limitation (for example on SIP-signaling default port 5060) between a SIP call server (so called SIP proxy server) and the network in order to protect the SIP proxy server from overload. However, such a device cannot detect and remove malicious SIP messages attacking the SIP proxy server.

Furthermore, dynamic border gate technologies (for example the Aravox firewall from former Aravox Technologies Inc., 4201 Lexington Avenue North, Suite 1105, Arden Hills, MN 55126, USA, recently taken over by Alcatel) are known in the art, which offer layer 3 and 4 firewalling, flow-based pinholing and bandwidth limitation. As dynamic firewalling concept it is controlled by a MIDCOM-style interface. Firewall rules are compiled and inserted into the access-restricting means (firewall logic). Usually, at present only the media path and not the signaling path is considered.

To detect attacks, the call server itself may have the ability to internally classify all received messages and then to remove the malicious messages after inspection directly at the input. Though this keeps the call server from holding too many uncompleted call states in memory, it does not inhibit the overload situation at the call server input because messages have to reach the call server, where each message is classified and removed in case it is malicious. This means that in the art messages indeed have to be processed but eventually are deleted, hopefully without causing any harm to the call server.

Since the firewall in front of the call server itself has no application awareness, in particular it cannot differentiate between correct messages and attacks, all messages have to reach the call server for inspection. This means that the ratio of valid to malicious messages at the input of the call server is not changed and the availability of the call server for valid callers remains unsatisfying. So static packet filtering rules and bandwidth limitation give only a very basic security to the call server, as long as not all application information (messages) is thoroughly checked.

The known methods for preventing attacks on a call server within a VoIP-environment usually have an attack-detection-device assigned to or even incorporated into the call server. The attack-detection-device comprises algorithms and rules for analyzing the traffic received by the call server and for detecting potential attacks. For example, the call server can observe the call completion rate (CCR). If the CCR is below a certain level, this may be a sign for a denial of service (DoS)-attack or a distributed DOS (DDoS)-attack on the call server. In that case the attacking user agent sends numerous signaling messages to the call server requesting the set-up of VoIP-communication links to other user agents (for example, "Invite"-messages in SIP). The attack can be driven from one user agent (DoS-attack) or from numerous distributed user agents (DDoS-attack). Another sign for an attack on the call server is an exaggerated number of call attempts per second (CAPS). For example an exaggerated 10.000 CAPS/sec. instead of a normal number of about 100 to 200 CAPS/sec. indicates an attack on the call server).

In the state of the art, the access restricting means are controlled directly by the call-server. This means that the call-server has to handle and process each message coming in, even if later on during firewalling it is regarded as a malicious message and is consequently removed. Processing and handling of each messages provokes an excessive workload for the call server.

The patent applications DE 10152010 A1 and US 2003/0145225 A1 disclose network servers implementing attack detection and protection mechanisms.

The document REYNOLDS B.; GHOSAL D.: "Secure IP Telephony using Multi-layered Protection" PROCEEDINGS OF THE 10TH ANNUAL NETWORK AND DISTRIBUTED SYSTEM SECURITY SYMPOSIUM, SAN DIEGO, CA, USA, 6-7 FEBRUARY 2003, INTERNET SOCIETY, RESTON, VA, USA ISBN: 1-891562-16-9, discloses sensor devices for protecting IP telephony servers and terminals against flooding attacks. The sensor devices are able to detect attacks analysing transport and application layer traffic. When an attack is detected the sensors may activate protection measures by instructing the IP telephony server or the firewall to block the attack.

It is an object of the present invention to provide a method for preventing attacks on a call server within a VoIP-environment, the method on the one hand assuring a secure and reliable filtering of malicious messages destined for the call server and on the other hand reducing the workload of the call server for handling, processing and filtering the messages coming in.

This object is achieved by a method of the kind mentioned above which is characterized by the following steps:
- characteristic parameters of the attacks identified are entered into a black-list,
- the content of the black-list is transmitted to an attack-prevention-device for controlling the access restricting means,
- the attack-prevention-device inspects and analyzes traffic directed from the network to the network server and controls the access restricting means according to the content of the black-list and according to the characteristic parameters of the traffic analyzed, and
- the access restricting means restrict access from the network to the network server according to control commands received from the attack-prevention-device.

According to the present invention an advanced method is provided by a fast and highly responsive combination of an attack-detection-device with an attack-prevention-device operating with a special black-list. The type and realization of the attack-detection-device is not part of the present invention. In a possible embodiment, the detection-device should be easily programmable, in order to quickly react on concrete new attacking types and scenarios. The attack-detection-device can be disposed separately from the network server. Alternatively, it can be partly or completely included within the network server.

It is necessary to derive distinguishing information of conspicuous or malicious messages of the traffic, for example characteristic attributes and parameters of these messages. The distinguishing information is entered in the black-list and is used by the attack-prevention-device for distinguishing malicious messages (making part of an attack) from normal messages (making part of a signaling procedure or of a media flow).

The attack-prevention-device can perform thorough data packet inspection and pattern matching operations, in order to achieve filtering, blocking and/ or throttling of messages, whose distinguishing information matches with the distinguishing information contained in the black-list. A possible most efficient pattern matching method can be easily implemented as hash table look-ups. Although the attack-prevention-device can perform inspection and analyzing operations, that is it can identify the content of the inspected messages, it does not understand the content of the messages or perform any processing of the content. The attack-prevention-device can scan any kind of data for a certain content, irrespective of the protocol of the data transmission and/ or a signaling protocol.

The content of the black-list is an important issue of the present invention. The black-list holds the complete information required by the attack-prevention-device to handle each message or each data-packet respectively addressed to the network server. The content of the black-list is created by the attack-detection-device according to certain definition parameters for defining the messages or the data-packets.

The attack-prevention-device has a restricted intelligence. Its function can be compared to the duty of a gate-keeper, who has to control access to a restricted area (corresponding to the network server). The gate-keeper looks at a person (corresponding to the messages), who desires access into the restricted area, and has to decide according to certain algorithms, rules or lists, etc. (contained in the black-list) whether the person is allowed in or not. Depending on the outcome of the gate-keeper's decision, the gate-keeper opens the gate (corresponding to the access restricting means) and lets the person pass or leaves the gate closed and refuses entrance of the person. The gate-keeper acquires no knowledge why the person wants to enter the restricted area or what the person carries with him. The gate-keeper simply checks, whether certain obvious conditions are fulfilled (for example, if the person carries a weapon, or if the person carries an appropriate ID-card) and lets the person pass through or refuses entrance of the person accordingly.

The attack-prevention-device is blocking or limiting traffic destined to the network server, based on the content of the black-list. The black-list, for example, contains patterns or attributes, describing malicious or conspicuous traffic. In a Voice-over-Internet-Protocol (VoIP)-environment, possible attributes or patterns could be for example in SIP: "to"-, "from"-, "via"-fields, IP-addresses, TCP (Transmission Control Protocol)/ UDP (User Datagram Protocol)-ports, etc. and combinations thereof. The patterns and attributes are created by the attack-detection-device, are entered into the black-list and are transferred to the attack-prevention-device. The patterns and attributes can be entered into the black-list in the realm of the attack-detection-device and then be transmitted to the attack-prevention-device in the black-list. In this case the black-list is created by the attack-detection-device and transmitted as a whole to the attack-prevention-device.

Alternatively, the patterns and attributes of messages identified to be conspicuous or malicious can be transmitted to the attack-prevention-device and entered into the black-list in the realm of the attack-prevention-device. This has the advantage that every time the black-list is updated, only the changes of the patterns and attributes and not the entire black-list have to be transmitted to the attack-prevention-device.

According to a preferred embodiment of the present invention it is suggested that the network server is a call server making part of a call-based-services-environment. The environment comprises the network, the call server connected to the network and at least one user agent connected to the network. The call server is adapted for setting up a data transmission connection between the at least one user agent and at least one other user agent by means of signaling messages. The signaling messages are transmitted between the call server and the user agents across the network and across the access restricting means. The attack-prevention-device inspects and analyzes the signaling messages of the traffic directed from the network to the call server. Preferably, the call-based-services-environment is a Voice-over-Internet-Protocol (VoIP)-environment.

It is suggested that patterns and/ or attributes defining conspicuous or malicious traffic directed from the network to the network server are entered in the black-list as characteristic parameters. Preferably, the patterns and/ or attributes defining traffic directed to the network server are identified as being conspicuous or malicious by the attack-detection-device. For that purpose, attributes and characteristics of the malicious and conspicuous traffic messages have to be derived and defined before the method according to the invention can be properly executed. In SIP, for example, the combination of attributes depends on the scenario and the a-priori knowledge of the SIP provider. For example, if address spoofing is inhibited for its network access customers, a filtering can leverage the relation between the SIP "from"-field and the IP source address, so that DoS-attacks from its own realm can be blocked. If a DDoS-attacker uses a specific pattern within any SIP-header field - or specific meta information between the regular header fields - it can be detected and blocked at wire-speed.

According to a preferred embodiment of the present invention, the content of the black-list is constantly and dynamically updated during operation of the network server.

According to another preferred embodiment of the invention, it is suggested that the content of the black-list is transmitted to the attack-prevention-device via a feedback-path. According to this embodiment, a path for data-transmission is provided between the attack-detection-device and the attack-prevention-device. Preferably, the path allows wire-speed data transmission.

According to yet another preferred embodiment of the invention, the steps of
- detecting and identifying attacks from the network on the network server,
- entering the characteristic parameters of the attacks identified into the black-list,
- transmitting the content of the black-list to the attack-prevention-device,
- analyzing the traffic directed from the network to the network server and controlling the access restricting means according to the content of the black-list and according to the characteristic parameters of the traffic analyzed, and
- restricting access from the network to the network server according to the control commands received from the attack-prevention-device
are preformed at wire-speed. The processing at wire-speed is also called real-time-processing or non-blocking-processing. Wire-speed-processing in the attack-detection-device and the attack-prevention-device means that the overall rate of processing must at least correspond to the desired maximum bandwidth for transmitting messages across the network to the network server in any operating condition of the VoIP-environment. Preferably the rate of processing is higher than the maximum bandwidth for transmitting messages across the network in order to ensure wire-speed processing even in the worst-case.

It is suggested that the attack-prevention-device performs an inspection and analysis of the traffic directed from the network to the network server, in order to determine whether the messages directed to the network server correspond to or comprise patterns and/ or attributes contained in the black-list. In particular, the analysis of the traffic comprises comparing the characteristic parameters entered into the black-list and defining traffic identified as being conspicuous or malicious.

Preferably the attack-prevention-device performs a filtering, blocking and/ or throttling of the inspected traffic whose characteristic parameters match with the characteristic parameters entered into the black-list and defining traffic identified as being conspicuous or malicious. For performing the filtering, blocking and/ or throttling of the inspected messages of the traffic, the attack-prevention-device sends appropriate control signals to the access-restricting-means. Of course, the attack-prevention-device and the access-restricting-means can be incorporated in a single common device, which can be referred to as a session-enabled-firewall.

It is particularly important to prevent attacks on the network server with conspicuous or malicious signaling messages. Therefore, it is suggested that the attack-prevention-device performs an inspection and analysis of signaling messages of the traffic directed from the network to the network server. Preferably, the attack-prevention-device performs an inspection and analysis of signaling messages according to the SIP (Session Initiation Protocol)-standard. Alternatively, the attack-prevention-device performs an inspection and analysis of signaling messages according to the H.323-standard.

Further, the above-mentioned object is achieved by an attack-prevention-device of the kind mentioned above, comprising
- input means for receiving a black-list comprising characteristic parameters on attacks from the network on the network server, the attacks being detected and identified by an attack-detection-device making part of the network server,
- means for performing an inspection and analysis of the traffic directed from the network to the network server, and for determining characteristic parameters of the traffic,
- means for creating control signals for the access restricting means according to the content of the black-list and according to the characteristic parameters of the traffic analyzed, and
- output means for transmitting the control signals to the access restricting means.

According to a preferred embodiment of the invention it is suggested that the means for performing an inspection and analysis of the traffic directed from the network to the network server inspect and analyze signaling messages of the traffic. In particular, it is suggested that the network server is a call server making part of a call-based-services-environment. The environment comprises the network, the call server connected to the network and at least one user agent connected to the network. The call server is adapted for setting up a data transmission connection between the at least one user agent and at least one other user agent by means of signaling messages. The signaling messages are transmitted between the call server and the user agents across the network and across the access restricting means. The means for performing an inspection and analysis of the traffic inspect and analyze the signaling messages of the traffic directed from the network to the call server.

Preferably, the means for performing an inspection and analysis of the traffic directed from the network to the call server inspect and analyze signaling messages according to a SIP (Session Initiation Protocol)-standard.

According to another preferred embodiment of the invention it is suggested that the black-list contains patterns and/or attributes describing malicious and/ or conspicuous traffic and that the means for performing an inspection and analysis of the traffic directed from the network to the network server perform a pattern and/ or attribute matching operation in order to determine whether the inspected and analyzed traffic comprises an attack on the network server.

Further features and advantages of the present invention are explained in more detail below with reference to the accompanying drawings. The figure shows:

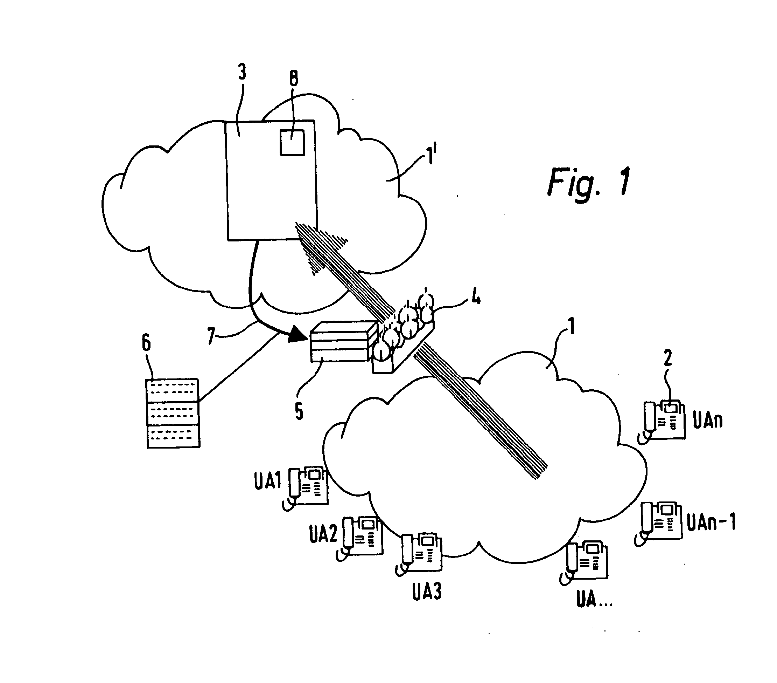

- Figure 1: a general view of a Voice-over-IP (VoIP)-environment, in which the method according to the present invention can be executed.

Now by way of example and referring to figure 1, the present invention will be described in more detail for a Voice-over-Internet-Protocol (VoIP)-environment, in particular comprising Session Initiation Protocol (SIP)-signaling. However, the present invention is not limited to SIP-signaling. Other signaling protocols, for example H.323-protocol, can be used, too. Furthermore, the invention is not limited to VoIP-environments. Rather, the present invention can be used for any kind of peer-to-peer communication link to be established or already established between the network server and any part of the network (e.g. other servers or user agents connected to the network). Finally, the invention is not limited to inspecting and analyzing signaling messages, but can be used for inspecting and analyzing payload messages (e.g. media information), too.

In figure 1 a VoIP-environment is shown, in which the method according to the present invention can be executed. The VoIP-environment uses SIP signaling messages. In figure 1 an Internet Protocol (IP) network is designated with reference number 1. Of course, any other kind of network protocol can be used, too. A number of User Agents UA1, UA2, UA3, ..., UAn-1, UAn, all designated with reference sign 2 are connected to the IP-network 1. Furthermore, a call server 3, namely the SIP Proxy-Server, is connected to the IP-network 1. Access restricting means 4, namely a firewall, are disposed between the SIP Proxy-Server 3 and the IP-network 1. The firewall 4 prevents certain SIP-messages from reaching the SIP Proxy-Server 3 out of the IP-network 1. Therefore, that part of the IP-network 1 disposed beyond the firewall 4 can be regarded as the safe part or the secure side 1' of the network 1. The firewall 4 does not perform any analyzing of the traffic directed to the call server 3. It is simply a gate without its own intelligence and controlled by one or more other entities in order to open or close it and to let certain data pass and to reject other data.

The firewall 4 is controlled by an attack-prevention-device 5, namely a SIP-gate. The SIP-gate 5 tells the firewall 4 when to open letting certain SIP-messages pass and when to close preventing certain SIP-messages from entering the secure-side 1' of the network 1 and from reaching the SIP Proxy-Server 3. The SIP-gate 5 has a restricted intelligence allowing it to inspect and analyze incoming messages for the presence of certain characteristic parameters of the messages. The SIP-gate 5 does not understand the content of the scanned messages nor does it process the content to such an extent that it performs certain actions as a result of the content. This allows the SIP-gate 5 to work independent of the signaling protocol (e.g. SIP) used in the environment.

The SIP-gate 5 receives a so-called black-list 6 from the SIP-proxy-server 3 across a feedback-path 7. The black-list 6 comprises information on those SIP-messages, which are to be blocked or at least restricted in number. The black-list 6 does not contain individual information on each SIP-message to be blocked or restricted. Rather, the black-list 6 comprises characteristic parameters, for example certain patterns or attributes, defining that kind of SIP-messages, which is to be blocked or restricted. The SIP-gate 5 inspects and analyzes the SIP-messages directed to the SIP Proxy-Server 3 in order to determine, whether the inspected and analyzed SIP-messages comprise an attack on the SIP-proxy-server 3 or not. Inspecting and analyzing the SIP-messages comprises comparing the characteristic parameters of the inspected SIP-messages with the respective characteristic parameters contained in the black-list 6 and defining conspicuous or malicious SIP-messages. In particular, the inspection and analyses of the SIP-messages by the SIP-gate 5 comprises pattern- and/or attribute-matching operations. The firewall 4 and the SIP-gate 5 together constitute a so-called session enabled firewall.

The content of the black-list 6 is created in an attack-detection-device 8 situated in or near to the SIP Proxy-Server 3. The rules, attributes and/or patterns defining conspicuous and malicious SIP-messages are entered in the black-list 6 and then transmitted to the SIP-gate 5 across the feedback-path 7. Alternatively the rules, attributes and/or patterns defining conspicuous and malicious SIP-messages are transmitted to the SIP-gate 5 and entered in the black-list 6 there. The attack-detection-device 8 may perform a static attack-detection-algorithm for detecting attacking SIP-messages in a way, known in the art. It is possible that the attack-detection-device 8 performs new algorithms for detecting attacking SIP-messages as quickly and as reliably as possible, which are not known in the art. However, the algorithms used by the attack-detection-device 8 are not subject of the present invention.

A main issue of the present invention is the fact, that an intelligent device, namely the attack-detection-device 8, performs the actual detection of attacking SIP-messages and creates the rules, patterns and/or attributes for defining those SIP-messages, which constitute an attack on the SIP Proxy-Server 3. The rules, patterns and/or attributes for these SIP-messages are entered into the black-list 6. Furthermore, a device with restricted intelligence, namely the attack-prevention-device or the SIP-gate 5, performs the control of the firewall 4 depending on the content of the black-list 6. That has the advantage that conspicuous or malicious SIP-messages are blocked or restricted before and not after reaching the SIP-proxy-server 3. For inspecting and analyzing incoming SIP-messages, the SIP-gate 5 just looks at the content of the SIP-messages, for example at the information contained in the header or at the payload-information, but does not have to understand the content. The SIP-gate 5 has to perform simple pattern-and/ or attribute-matching operations. The reduced intelligence of the SIP-gate 5 allows a very fast processing speed of the SIP-gate 5. Furthermore, the reduced intelligence of the SIP-gate 5 makes it very hard for potential attackers to actually drive an attack on the SIP-gate 5 thereby manipulating the firewall 4 and opening the way for a subsequent attack on the SIP Proxy-Server 3.

To allow a fast reaction on a detected attack on the SIP Proxy-Server 3, preferably the steps of:
- detecting and identifying attacks from the IP-network 1 on the SIP-proxy-server 3,
- entering the characteristic parameters defining the attacking messages into the black-list 6,
- transmitting the content of the black-list 6 via the feedback-path 7 to the SIP-gate 5,
- scanning, inspecting and/ or analyzing the traffic directed from the IP-network 1 to the SIP Proxy-Server 3 and controlling the firewall 4 according to the content of the black-list 6 and according to the characteristic parameters of the traffic analyzed, and
- restricting access from the IP-network 1 to the SIP Proxy-Server 3 according to the control commands received from the SIP-gate 5
are performed at wire-speed. The content of the black-list 6 is constantly and dynamically updated during operation of the SIP Proxy-Server 3. However, as mentioned above, the content of the black-list 6 is used only for controlling the firewall 4. The detection of malicious and suspicious messages is performed independently from the black list 6 within the attack-detection-device 8 of the SIP-proxy-server 3. Therefore, changing the content of the black list 6 changes the behavior of the firewall 4 but has no influence on the detection of malicious and suspicious messages.

The idea of the present invention is to source out the low-level data-packet analyzing from the SIP Proxy-Server 3 to the SIP-gate 5. By doing so, malicious and conspicuous data-packets can be detected and removed by the firewall 4 before reaching the SIP Proxy-Server 3 and consuming resources there. However, only low-level analyzing is outsourced to the SIP-gate 5, in order to assure fast processing within the session enabled firewall 4, 5. Preferably the session enabled firewall 4, 5 works at wire-speed or in real-time.

## Claims

1. Method for preventing attacks on a network server (3) connected to a network (1), wherein data is transmitted between the network (1) and the network server (3) across means (4) for restricting access to the network server (3), wherein the network server (3) comprises an attack-detection-device (8) for detecting and identifying attacks from the network (1) on the network server (3), and wherein
- characteristic parameters of the attacks identified are entered into a black-list (6),
- the content of the black-list (6) is transmitted to an attack-prevention-device (5) for controlling the access restricting means (4),
- the attack-prevention-device (5) inspects and analyzes traffic directed from the network (1) to the network server (3) and controls the access restricting means (4) according to the content of the black-list (6) and according to the characteristic parameters of the traffic analyzed, and
- the access restricting means (4) restrict access from the network (1) to the network server (3) according to control commands received from the attack-prevention-device (5).

2. Method according to claim 1, **characterized in that** the network server (3) is a call server making part of a call-based-services-environment, the environment comprising the network (1), the call server (3) connected to the network (1) and at least one user agent (2) connected to the network (1), the call server (3) being adapted for setting up a data transmission connection between the at least one agent (2) and at least one other user agent (2) by means of signaling messages, wherein the signaling messages are transmitted between the call server (3) and the user agents (2) across the network (1) and across the access restricting means (4), and wherein the attack-prevention-device (5) inspects and analyzes the signaling messages of the traffic directed from the network (1) to the call server (3).

3. Method according to claim 2, **characterized in that** the method is used for preventing attacks on a call server (3) within a Voice-over-Internet-Protocol (VoIP)-environment.

4. Method according to any one of the preceding claims,
**characterized in that** patterns and/ or attributes defining conspicuous or malicious traffic directed from the network (1) to the network server (3) are entered in the black-list (6) as characteristic parameters.

5. Method according to any one of the preceding claims,
**characterized in that** the content of the black-list (6) is constantly and dynamically updated during operation of the network server (3).

6. Method according to any one of the preceding claims,
**characterized in that** the attacks are identified and the characteristic parameters are entered into the black-list (6) by the attack-detection-device (8).

7. Method according to any one of the preceding claims,
**characterized in that** the content of the black-list (6) is transmitted to the attack-prevention-device (5) via a feedback-path (7).

8. Method according to any one of the preceding claims,
**characterized in that** the steps of
- detecting and identifying attacks from the network (1) on the network server (3),
- entering the characteristic parameters of the attacks identified into the black-list (6),
- transmitting the content of the black-list (6) to the attack-prevention-device (5),
- analyzing the traffic directed from the network (1) to the network server (3) and controlling the access restricting means (4) according to the content of the black-list (6) and according to the characteristic parameters of the traffic analyzed, and
- restricting access from the network (1) to the network server (3) according to the control commands received from the attack-prevention-device (5) are preformed at wire-speed.

9. Method according to any one of the preceding claims, **characterized in that** the analysis of the traffic directed from the network (1) to the network server (3) comprises comparing the characteristic parameters of the inspected traffic with the characteristic parameters entered into the black-list (6) and defining traffic identified as being conspicuous or malicious.

10. Method according to claim 9, **characterized in that** the attack-prevention-device (5) performs a filtering, blocking and/ or throttling of the inspected traffic whose characteristic parameters match with the characteristic parameters entered into the black-list (6) and defining traffic identified as being conspicuous or malicious.

11. Method according to one of the claims 2 to 10,
**characterized in that** the attack-prevention-device (5) performs an inspection and analysis of signaling messages according to a SIP (Session Initiation Protocol)-standard.

12. Method according to one of the claims 2 to 10,
**characterized in that** the attack-prevention-device (5) performs an inspection and analysis of signaling messages according to a H.323-standard.

13. Attack-prevention-device (5) for preventing attacks on a network server (3) connected to a network (1) via means (4) for restricting access to the network server (3) from the network (1), wherein the attack-prevention-device (5) is adapted to control the access restricting means (4), wherein the attack-prevention-device (5) comprises
- means for performing an inspection and analysis of the traffic directed from the network (1) to the network server (3), and for determining characteristic parameters of the traffic,
- output means for transmitting control signals to the access restricting means (4),
**characterized in that** the attack-prevention-device comprises
- input means for receiving a black-list (6) comprising characteristic parameters on attacks from the network (1) on the network server (3), the attacks being detected and identified by an attack-detection-device (8) making part of the network server (3),
- means for creating the control signals for the access restricting means (4) according to the content of the black-list (6) and according to the characteristic parameters of the traffic analyzed.

14. Attack-prevention-device (5) according to claim 13,
**characterized in that** the network server (3) is a call server making part of a call-based-services-environment, the environment comprising the network (1), the call server (3) connected to the network (1) and at least one user agent (2) connected to the network (1), the call server (3) being adapted for setting up a data transmission connection between the at least one user agent (2) and at least one other user agent (2) by means of signaling messages, wherein the signaling messages are transmitted between the user agents (2) and the call server (3) across the network (1) and across the access restricting means (4), and wherein the means for performing an inspection and analysis of the traffic inspect and analyze the signaling messages of the traffic directed from the network (1) to the call server (3).

15. Attack-prevention-device (5) according to claim 14, **characterized in that** the means for performing an inspection and analysis of the traffic directed from the network (1) to the call server (3) inspect and analyze signaling messages according to a SIP (Session Initiation Protocol)-standard.

16. Attack-prevention-device (5) according to one of the claim 13 to 15, **characterized in that** the black-list (6) contains patterns and/ or attributes describing malicious and/ or conspicuous traffic and that the means for performing an inspection and analysis of the traffic directed from the network (1) to the network server (3) perform a pattern and/ or attribute matching operation in order to determine whether the inspected and analyzed traffic comprises an attack on the network server (3).

## Patentansprüche

1. Verfahren zur Verhinderung von Angriffen auf einen mit einem Netzwerk (1) verbundenen Netzwerkserver (3), wobei zwischen dem Netzwerk (1) und dem Netzwerkserver (3) über Mittel (4) zur Einschränkung des Zugangs zum Netzwerkserver (3) Daten übertragen werden, wobei der Netzwerkserver (3) ein Angriffserkennungsgerät (8) zum Erkennen und Identifizieren von Angriffen vom Netzwerk (1) auf den Netzwerkserver (3) beinhaltet, und wobei
- charakteristische Parameter der identifizierten Angriffe in eine schwarze Liste (6) eingetragen werden,
- der Inhalt der schwarzen Liste (6) an ein Angriffsverhinderungsgerät (5) übermittelt wird, um die Zugangsbeschränkungsmittel (4) zu steuern,
- das Angriffsverhinderungsgerät (5) Datenverkehr kontrolliert und analysiert, der vom Netzwerk (1) an den Netzwerkserver (3) gerichtet ist, und die Zügangsbeschränkungsmittel (4) in Abhängigkeit vom Inhalt der schwarzen Liste (6) sowie in Abhängigkeit von den charakteristischen Parametern des analysierten Datenverkehrs steuert und
- die Zugangsbeschränkungsmittel (4) den Zugang vom Netzwerk (1) zum Netzwerkserver (3) in Abhängigkeit von Steuerungsbefehlen einschränken, die vom Angriffsverhinderungsgerät (5) empfangen wurden.

2. verfahren gemäß Anspruch 1, **dadurch gekennzeichnet, daß** der Netzwerkserver (3) ein Call-Server ist, der Bestandteil einer auf Anrufdiensten basierenden Betriebsumgebung ist, wobei die Betriebsumgebung das Netzwerk (1), den mit dem Netzwerk (1) verbundenen Call-Server (3) und mindestens einen mit dem Netzwerk (1) verbundenen Benutzer-Agent (2) beinhaltet und der Call-Server (3) für den Aufbau einer Datenübertragungsverbindung zwischen dem mindestens einen Benutzer-Agent (2) und mindestens einem anderen Benutzer-Agent (2) mit Hilfe von Signalisierungsmeldungen ausgelegt ist, wobei die Signalisierungsmeldungen zwischen dem Call-Server (3) und den Benutzer-Agents (2) über das Netzwerk (1) und über die Zugangsbeschränkungsmittel (4) übertragen werden, und wobei das Angriffsverhinderungsgerät (5) die Signalisierungsmeldungen des vom Netzwerk (1) zum Call-Server (3) gerichteten Datenverkehrs kontrolliert und analysiert.

3. Verfahren gemäß Anspruch 2, **dadurch gekennzeichnet, daß** das Verfahren zum Verhindern von Angriffen auf einen Call-Server (3) innerhalb einer Voice-over-Internet-Protocol-Betriebsumgebung (VoIP-Umgebung) angewandt wird.

4. Verfahren gemäß einem oder mehreren der vorstehenden Ansprüche, **dadurch gekennzeichnet, daß** Muster und/oder Attribute, die verdächtigen oder böswilligen Datenverkehr definieren, der vom Netzwerk (1) zum Netzwerkserver (3) gerichtet ist, als charakteristische Parameter in die schwarze Liste (6) eingetragen werden.

5. Verfahren gemäß einem oder mehreren der vorstehenden Ansprüche, **dadurch gekennzeichnet, daß** der Inhalt der schwarzen Liste (6) während des Betriebs des Netzwerkservers (3) kontinuierlich und dynamisch aktualisiert wird.

6. Verfahren gemäß einem oder mehreren der vorstehenden Ansprüche, **dadurch gekennzeichnet, daß** die Angriffe identifiziert werden und die charakteristischen Parameter vom Angriffserkennungsgerät (8) in die schwarze Liste (6) eingetragen werden.

7. Verfahren gemäß einem oder mehreren der vorstehenden Ansprüche, **dadurch gekennzeichnet, daß** der Inhalt der schwarzen Liste (6) über einen Rückmeldungszweig (7) zum Angriffsverhinderungsgerät (5) übertragen wird.

8. Verfahren gemäß einem oder mehreren der vorstehenden Ansprüche, **dadurch gekennzeichnet, daß** die Schritte,
- vom Netzwerk (1) stammende Angriffe auf den Netzwerkserver (3) zu erkennen und zu identifizieren,
- die charakteristischen Parameter der identifizierten Angriffe in die schwarze Liste (6) einzutragen,
- den Inhalt der schwarzen Liste (6) an das Angriffsverhinderungsgerät (5) zu übermitteln,
- den Datenverkehr, der vom Netzwerk (1) an den Netzwerkserver (3) gerichtet ist, zu analysieren und die Zugangsbeschränkungsmittel (4) in Abhängigkeit vom Inhalt der schwarzen Liste (6) sowie in Abhängigkeit von den charakteristischen Parametern des analysierten Datenverkehrs zu steuern und
- den Zugang vom Netzwerk (1) zum Netzwerkserver (3) in Abhängigkeit von den vom Angriffsverhinderungsgerät (5) empfangenen Steuerungsbefehlen einzuschränken,
mit Leitungsgeschwindigkeit ausgeführt werden.

9. Verfahren gemäß einem oder mehreren der vorstehenden Ansprüche, **dadurch gekennzeichnet, daß** die Analyse des vom Netzwerk (1) zum Netzwerkserver (3) gerichteten Datenverkehrs das Vergleichen der charakteristischen Parameter des kontrollierten Datenverkehrs mit den in die schwarze Liste (6) eingetragenen charakteristischen Parametern sowie das Definieren von als verdächtig oder böswillig identifiziertem Datenverkehr beinhaltet.

10. Verfahren gemäß Anspruch 9, **dadurch gekennzeichnet, daß** das Angriffsverhinderungsgerät (5) das Filtern, Blockieren und/oder Unterdrücken des kontrollierten Datenverkehrs, dessen charakteristische Parameter mit den in die schwarze Liste (6) eingetragenen charakteristischen Parametern übereinstimmen, sowie das Definieren von als verdächtig oder böswillig identifiziertem Datenverkehr bewerkstelligt.

11. Verfahren gemäß einem der Ansprüche 2 bis 10, **dadurch gekennzeichnet, daß** das Angriffsverhinderungsgerät (5) eine Kontrolle und Analyse von Signalisierungsmeldungen gemäß einem SIP-Standard (mit "SIP" für "Session Initiating Protocol") durchführt.

12. Verfahren gemäß einem der Ansprüche 2 bis 10, **dadurch gekennzeichnet, daß** das Angriffsverhinderungsgerät (5) eine Kontrolle und Analyse von Signalisierungsmeldungen gemäß einem H.323-Standard durchführt.

13. Angriffsverhinderungsgerät (5) zur Verhinderung von Angriffen auf einen Netzwerkserver (3), der über Zugangsbeschränkungsmittel (4), die zum Einschränken des Zugangs vom Netzwerk (1) zum Netzwerkserver (3) dienen, mit einem Netzwerk (1) verbunden ist, wobei das Angriffsverhinderungsgerät (5) zum Steuern der Zugangsbeschränkungsmittel (4) ausgelegt ist, wobei das Angriffsverhinderungsgerät (5)
- Mittel zum Durchführen einer Kontrolle und Analyse des vom Netzwerk (1) an den Netzwerkserver (3) gerichteten Datenverkehrs sowie zur Ermittlung charakteristischer Parameter des Datenverkehrs und
- Ausgabemittel zum Übertragen von Steuerungssignalen an die Zugangsbeschränkungsmittel (4) beinhaltet,
**dadurch gekennzeichnet, daß** das Angriffsverhinderungsgerät (5)
- Eingabemittel zum Empfangen einer schwarzen Liste (6), beinhaltend charakteristische Parameter zu Angriffen vom Netzwerk (1) auf den Netzwerkserver (3), wobei die Angriffe von einem Angriffserkennungsgerät (8) erkannt und identifiziert werden, das Bestandteil des Netzwerkservers (3) ist, und
- Mittel zum Erzeugen der Steuerungssignale für die Zugangsbeschränkungsmittel (4) in Abhängigkeit vom Inhalt der schwarzen Liste (6) sowie von den charakteristischen Parametern des analysierten Datenverkehrs
beinhaltet.

14. Angriffsverhinderungsgerät (5) gemäß Anspruch 13, **dadurch gekennzeichnet, daß** der Netzwerkserver (3) ein Call-Server ist, der Bestandteil einer auf Anrufdiensten basierenden Betriebsumgebung ist, wobei die Betriebsumgebung das Netzwerk (1), den mit dem Netzwerk (1) verbundenen Call-Server (3) und mindestens einen mit dem Netzwerk (1) verbundenen Benutzer-Agent (2) beinhaltet und der Call-Server (3) für den Aufbau einer Datenübertragungsverbindung zwischen dem mindestens einen Benutzer-Agent (2) und mindestens einem anderen Benutzer-Agent (2) mit Hilfe von Signalisierungsmeldungen ausgelegt ist, wobei die Signalisierungsmeldungen zwischen den Benutzer-Agents (2) und dem Call-Server (3) über das Netzwerk (1) und über die Zugangsbeschränkungsmittel (4) übertragen werden, und wobei die Mittel zum Durchführen einer Kontrolle und Analyse des Datenverkehrs Signalisierungsmeldungen des Datenverkehrs kontrollieren und analysieren, der vom Netzwerk (1) an den Call-Server (3) gerichtet ist.

15. Angriffsverhinderungsgerät (5) gemäß Anspruch 14, **dadurch gekennzeichnet, daß** die Mittel zum Durchführen einer Kontrolle und Analyse des vom Netzwerk (1) an den Call-Server (3) gerichteten Datenverkehrs Signalisierungsmeldungen gemäß einem SIP-Standard (mit "SIP" für "Session Initiating Protocol") kontrollieren und analysieren.

16. Angriffsverhinderungsgerät (5) gemäß einem der Ansprüche 13 bis 15, **dadurch gekennzeichnet, daß** die schwarze Liste (6) Muster und/oder Attribute enthält, welche böswilligen und/oder verdächtigen Datenverkehr beschreiben, und daß die Mittel die Mittel zum Durchführen einer Kontrolle und Analyse des vom Netzwerk (1) an den Netzwerkserver (3) gerichteten Datenverkehrs eine Funktion zur Überprüfung von Mustern und/oder Attributen auf Übereinstimmung ausführen, um festzustellen, ob der kontrollierte und analysierte Datenverkehr einen Angriff auf den Netzwerkserver (3) beinhaltet.

## Revendications

1. Procédé pour prévenir les attaques sur un serveur de réseau (3) connecté à un réseau (1), dans lequel des données sont transmises entre le réseau (1) et le serveur de réseau (3) à travers des moyens (4) pour restreindre l'accès au serveur de réseau (3), dans lequel le serveur de réseau (3) comprend un dispositif de détection d'attaques (8) pour détecter et identifier des attaques depuis le réseau (1) sur le serveur de réseau (3), et dans lequel
- des paramètres caractéristiques des attaques identifiées sont entrés dans une liste noire (6),
- le contenu de la liste noire (6) est transmis à un dispositif de prévention d'attaques (5) pour contrôler les moyens de restriction d'accès (4),
- le dispositif de prévention d'attaques (5) inspecte et analyse le trafic dirigé depuis le réseau (1) vers le serveur de réseau (3) et contrôle les moyens de restriction d'accès (4) selon le contenu de la liste noire (6) et selon les paramètres caractéristiques du trafic analysé, et
- les moyens de restriction d'accès (4) restreignent l'accès depuis le réseau (1) au serveur de réseau (3) selon des commandes de contrôle reçues du dispositif de prévention d'attaques (5).

2. Procédé selon la revendication 1, **caractérisé en ce que** le serveur de réseau (3) est un serveur d'appels faisant partie d'un environnement de services basés sur les appels, l'environnement comprenant le réseau (1), le serveur d'appels (3) connecté au réseau (1) et au moins un agent utilisateur (2) connecté au réseau (1), le serveur d'appels (3) étant adapté pour établir une connexion de transmission de données entre le au moins un agent (2) et au moins un autre agent utilisateur (2) au moyen de messages de signalisation, dans lequel les messages de signalisation sont transmis entre le serveur d'appels (3) et les agents utilisateurs (2) à travers le réseau (1) et à travers les moyens de restriction d'accès (4), et dans lequel le dispositif de prévention d'attaques (5) inspecte et analyse les messages de signalisation du trafic dirigé depuis le réseau (1) vers le serveur d'appels (3).

3. Procédé selon la revendication 2, **caractérisé en ce que** le procédé est utilisé pour prévenir les attaques sur un serveur d'appels (3) à l'intérieur d'un environnement Voix sur Protocole Internet (VoIP).

4. Procédé selon l'une quelconque des revendications précédentes, **caractérisé en ce que** des modèles et/ou attributs définissant un trafic manifeste ou malveillant dirigé depuis le réseau (1) vers le serveur de réseau (3) sont entrés dans la liste noire (6) comme paramètres caractéristiques.

5. Procédé selon l'une quelconque des revendications précédentes, **caractérisé en ce que** le contenu de la liste noire (6) est constamment et dynamiquement mis à jour durant l'opération du serveur de réseau (3).

6. Procédé selon l'une quelconque des revendications précédentes, **caractérisé en ce que** les attaques sont identifiées et les paramètres caractéristiques sont entrés dans la liste noire (6) par le dispositif de détection d'attaques (8).

7. Procédé selon l'une quelconque des revendications précédentes, **caractérisé en ce que** le contenu de la liste noire (6) est transmis au dispositif de prévention d'attaques (5) via un chemin de contre-réaction (7).

8. Procédé selon l'une quelconque des revendications précédentes, **caractérisé en ce que** les étapes consistant à
- détecter et identifier des attaques depuis le réseau (1) sur le serveur de réseau (3),
- entrer les paramètres caractéristiques des attaques identifiées dans la liste noire (6),
- transmettre le contenu de la liste noire (6) au dispositif de prévention d'attaques (5),
- analyser le trafic dirigé depuis le réseau (1) vers le serveur de réseau (3) et contrôler les moyens de restriction d'accès (4) selon le contenu de la liste noire (6) et selon les paramètres caractéristiques du trafic analysé, et
- restreindre l'accès depuis le réseau (1) au serveur de réseau (3) selon les commandes de contrôle reçues du dispositif de prévention d'attaques (5) sont exécutées à vitesse filaire.

9. Procédé selon l'une quelconque des revendications précédentes, **caractérisé en ce que** l'analyse du trafic dirigé depuis le réseau (1) vers le serveur de réseau (3) comprend la comparaison des paramètres caractéristiques du trafic inspecté avec les paramètres caractéristiques entrés dans la liste noire (6) et la définition du trafic identifié comme étant manifeste ou malveillant.

10. Procédé selon la revendication 9, **caractérisé en ce que** le dispositif de prévention d'attaques (5) effectue un filtrage, blocage et/ou limitation du trafic inspecté dont les paramètres caractéristiques concordent avec les paramètres caractéristiques entrés dans la liste noire (6) et une définition du trafic identifié comme étant manifeste ou malveillant.

11. Procédé selon l'une des revendications 2 à 10, **caractérisé en ce que** le dispositif de prévention d'attaques (5) effectue une inspection et une analyse des messages de signalisation selon une norme SIP (protocole d'ouverture de session).

12. Procédé selon l'une des revendications 2 à 10, **caractérisé en ce que** le dispositif de prévention d'attaques (5) effectue une inspection et une analyse des messages de signalisation selon une norme H.323.

13. Dispositif de prévention d'attaques (5) pour prévenir les attaques sur un serveur de réseau (3) connecté à un réseau (1) via des moyens (4) pour restreindre l'accès au serveur de réseau (3) depuis le réseau (1), dans lequel le dispositif de prévention d'attaques (5) est adapté pour contrôler les moyens de restriction d'accès (4), dans lequel le dispositif de prévention d'attaques (5) comprend
- des moyens pour effectuer une inspection et une analyse du trafic dirigé depuis le réseau (1) vers le serveur de réseau (3), et pour déterminer des paramètres caractéristiques du trafic,
- des moyens de sortie pour transmettre des signaux de contrôle aux moyens de restriction d'accès (4),
**caractérisé en ce que** le dispositif de prévention d'attaques comprend
- des moyens d'entrée pour recevoir une liste noire (6) comprenant des paramètres caractéristiques sur des attaques depuis le réseau (1) sur le serveur de réseau (3), les attaques étant détectées et identifiées par un dispositif de détection d'attaques (8) faisant partie du serveur de réseau (3),
- des moyens pour créer les signaux de contrôle pour les moyens de restriction d'accès (4) selon le contenu de la liste noire (6) et selon les paramètres caractéristiques du trafic analysé.

14. Dispositif de prévention d'attaques (5) selon la revendication 13, **caractérisé en ce que** le serveur de réseau (3) est un serveur d'appels faisant partie d'un environnement de services basés sur les appels, l'environnement comprenant le réseau (1), le serveur d'appels (3) connecté au réseau (1) et au moins un agent utilisateur (2) connecté au réseau (1), le serveur d'appels (3) étant adapté pour établir une connexion de transmission de données entre le au moins un agent utilisateur (2) et au moins un autre agent utilisateur (2) au moyen de messages de signalisation, dans lequel les messages de signalisation sont transmis entre les agents utilisateurs (2) et le serveur d'appels (3) à travers le réseau (1) et à travers les moyens de restriction d'accès (4), et dans lequel les moyens pour effectuer une inspection et une analyse du trafic inspectent et analysent les messages de signalisation du trafic dirigé depuis le réseau (1) vers le serveur d'appels (3).

15. Dispositif de prévention d'attaques (5) selon la revendication 14, **caractérisé en ce que** les moyens pour effectuer une inspection et une analyse du trafic dirigé depuis le réseau (1) vers le serveur d'appels (3) inspectent et analysent des messages de signalisation selon une norme SIP (protocole d'ouverture de session).

16. Dispositif de prévention d'attaques (5) selon l'une des revendications 13 à 15, **caractérisé en ce que** la liste noire (6) contient des modèles et/ou attributs décrivant un trafic malveillant et/ou manifeste et **en ce que** les moyens pour effectuer une inspection et une analyse du trafic dirigé depuis le réseau (1) vers le serveur d'appels (3) effectuent une opération de concordance avec un modèle et/ou attribut afin de déterminer si le trafic inspecté et analysé comprend une attaque sur le serveur de réseau (3).
